# EUROPEAN PATENT SPECIFICATION

(11) **EP 2 582 571 B1**
(45) Date of publication and mention of the grant of the patent: **19.10.2016**
(21) Application number: 11795288.7
(22) Date of filing: 17.06.2011
(51) Int. Cl.: B62M 11/04, B62M 6/50, B62M 6/55, B62M 9/06, B62M 23/02, F16H 9/24, F16H 61/02

(54) **CONTROL UNIT FOR A VEHICLE AND METHOD FOR CHANGING GEARS OF A VEHICLE**
STEUEREINHEIT FÜR EIN FAHRZEUG UND GANGÄNDERUNGSVERFAHREN FÜR EIN FAHRZEUG
UNITÉ DE COMMANDE POUR UN VÉHICULE ET PROCÉDÉ POUR CHANGER LES VITESSES D'UN VÉHICULE

(30) Priority: 04.08.2010 DE 102010036833; 17.06.2010 DE 102010017412
(43) Date of publication of application: 24.04.2013
(73) Proprietor: TQ-Systems GmbH, 82229 Seefeld (DE)
(72) Inventor: JÄKEL, Jürgen, 82024 Taufkirchen (DE)
(74) Representative: Schweiger, Martin
(86) International application number: PCT/IB2011/052659
(87) International publication number: WO 2011/158220

(56) References cited:
- EP-A1- 1 923 683
- EP-A2- 0 820 926
- EP-A2- 1 236 640
- EP-A2- 1 617 107
- JP-A- 10 287 150
- JP-A- 61 014 256
- US-A- 5 922 035
- US-A1- 2002 108 816
- US-A1- 2004 102 269
- US-A1- 2004 206 188
- US-A1- 2004 206 188
- US-A1- 2005 189 157
- US-B1- 6 364 044
- US-B1- 6 569 045

## Description

The application relates to a control unit for a vehicle and a method for changing gears of a vehicle. The vehicle comprises a drive for actuation by a rider and an electric motor, which supports the drive of the vehicle.

The documents DE 42 27 229 A1, DE 297 16 586 U1 and DE 196 42 605 A1 show gear controls for bicycles, which provide an automated process for changing gears depending on external parameters. Under these parameters are inputs by the rider as well as information about the ride as for example speed, incline and provided force. All these parameters are included to improve the process of changing gears by the automatic control unit. Such control units cannot directly be applied on drives in which an electromotor supports the force provided by a rider because changing the gears may produce noise.

The document US20050189157 discloses a control unit for a vehicle, the vehicle comprising at least one primary drive for actuation by a rider, a power-train for driving a wheel of the vehicle, whereby the powertrain comprises a gear unit with a gear control for changing the gear ratios of the gear unit, the gear unit comprising gears and a gear control unit, whereby the gear control unit comprises a shifter, with which a change of gear ratio of the gear unit is manually selectable, an electric motor for supporting the primary drive by providing torque, whereby the control unit is constructed for controlling the torque provided by the electric motor and for reducing the torque provided by the electric motor during a change of the gear ratio upon sensing the presence or threshold values of gear shift initiation alone, or gear shift initiation together with a motor condition.

It is an object to provide an improved control unit for a vehicle and a method for changing gears of a vehicle. This object is achieved by the subject matter of the independent claim. Advantageous modifications are disclosed in the subject matter of the dependent claims.

It is provided a control unit for a vehicle, an assembly of a control unit and a gear unit of a vehicle and a method for changing gears of a vehicle.

The vehicle comprises a primary drive for actuation by a rider and an electric motor. The power-train for driving a vehicle comprises a gear unit and a control unit for changing the gears. The electric motor supports the drive of the vehicle, if a gear is engaged. A control unit controls the torque provided by the electrical motor such that the torque provided by the electric motor is reduced during the change of the gear when torque provided by the rider is under a first threshold value.

With this control unit the electric motor supporting the drive and the drive actuated by a rider can be coordinated during changing the gear. This reduces the level of noise and helps to actuate the gears in a gentle way.

The control unit omits, during changing the gears, that the mechanical process of changing the gears causes hamper and damage as it is executed with reduced torque or even under torque-less and forceless conditions. In doing so, it is taken advantage of the fact that there are points of times, at which the gear is relatively free of load specified by the position of the crank because during the crank being in the dead centre, the drive provided by the rider is close to zero. As long as the drive is provided only by the rider with the help of cranks, the condition that the bottom bracket axle is load-free can be determined by measuring the torque that is provided in the power-train. The control unit takes into account that the electric motor can cause a considerable torque on the gears during each operational modus of the vehicle.

The disclosed control unit provides the advantage that the electric motor merely does not contribute to the drive of the vehicle as long as the process of changing the gear lasts. This ensures that a contribution by the electrical motor for driving the vehicle which is driven by a rider neither hampers nor damages components of the vehicle, particularly because the torque of the electric motor may be reduced until the electric motor is almost in idle mode.

When the changing of the gears is finished, the electric motor may automatically be accelerated to support the drive of the vehicle by the rider. The deceleration respectively the decrease of the torque of the electric motor before the process of changing the gear should not be under the direct control by the rider to ensure that, at the time of changing the gears, the electric motor makes almost no contribution to the driving torque of the vehicle. However, each time when the rider of the vehicle forgets to reduce the torque provided by the electric motor before the changing of the gears, there would be a danger of damaging the mechanical components of the gears.

Therefore, the torque provided by the electric motor is automatically reduced when the changing of the gears is initiated by the rider when torque provided by the rider is under a first threshold value.

Determining, when the torque provided by the rider is under a predetermined threshold value, makes sure that the electric motor may be shut down just before the gear change. Otherwise, the electric engine would turn already off even if the gear change will happen half a revolution of the cranks later. This ensures that time out period of torque reduction is short as possible such that the vehicle does not decelerate too much during gear change.

To make the shut down of the electric motor to not only depend on the movement of the engine control rotary switch by a rider, the gear control unit may comprise a torque determination device that captures the torque falling below the first threshold value and automatically reduces the torque provided by the electric motor via the control unit.

It should be noted, that the drive provided by the rider usually is provided by a crank of a crank unit. Such crank units comprise hand cranks or foot cranks, whereby these crank units usually have a dead centre in which the torque goes below a threshold value. That the torque of the drive provided by the rider falls below the threshold vale can be measured such that the process of changing the gears may reliably be executed as soon the torque of the supporting electric motor is shut down.

In an embodiment of the control unit, the torque determination device comprises a torque sensor which is mounted on a bottom bracket axle. If the crank unit is in a respective dead centre, which means at a position, at which the torque falls below the first threshold value, respective information is transmitted from the torque sensor to the control unit that automatically initiates a reduction of the torque provided by the electric motor.

The application also relates to an assembly of a control unit and a gear unit to change the gears.

If there is a Bowden cable for actuation of gears of a vehicle, the Bowden cable comprises, in an embodiment a measurement circuit for measuring a tension in the Bowden cable. Thereby, the measurement circuit for outputting a signal indicates a coming gear change if a change of the tension in the Bowden cable is measured.

The measurement of the tension in the Bowden cable gives an early indication of a coming gear change.

In an embodiment, the Bowden cable comprises an inner cable, two housings and a measurement unit, whereby the inner cable runs through the housings and the measurement circuit, the measurement unit is arranged between the two housings and comprises a pressure sensor which is to be compressed by the two housings.

Such a measurement unit may be used for vehicles like mountain bicycles, which require robust components that reliably work in moody and dusty environments.

In a further embodiment, the Bowden cable comprises an inner cable, a housing and a measurement circuit for measuring a movement of the inner cable, the measurement circuit outputs a signal for indicating a coming gear change if a movement of the inner cable is measured.

The Bowden cable comprises an optical sensor for determining a movement of the inner cable. The optical measurement has the advantage, that not only the movement but also the position of the inner cable and accordingly the selected sprocket may be calculated from the measurement results. The optical sensor and the control unit should be calibrated by defining a predetermined position as base position.

It is further possible, that the torque determination device comprises a position sensor that captures the position of the bottom bracket axle, whereby the positions, in which the torque falls below the first threshold value are known for different crank mechanisms. Such a position capture sensor may comprise a wheel rotating with the axle, whereby the wheel interrupts or activates a photo-electrical guard at both the dead centres of a turn of the cranks.

Further, it is possible to use magnetic switch sensors which comprise hall sensors for contactlessly measuring the position and for transmitting the measurement result to the control unit.

In another aspect of the current specification, the gear unit comprises a gear hub. Also for this gear hub, it is advantageous that it is switched in a load-less condition to avoid damages. Thus, the gear set comprises a shifter, with which a gear change can manually be selected.

Therefore, it is provided that the manual selection of a gear change activates an automatic capture to capture that the torque provided by the rider falls below the first threshold value with the help of a torque determination device as described above.

In another aspect of the current specification, the gear unit comprises a derailleur gear. Such a derailleur gear has the advantage that it comprises an arm which is biased by a spring, the spring pivoting around a pivot to put the chain in a right position under the selected sprocket of the derailleur during the changing of the gear.

The movement around the pivot can be used to control the torque provided by the electric motor both with automatic changing of the gears as well as with manual changing of the gears. Thereto, the gear unit comprises a movement sensor that initiates a decrease of torque provided by the electric motor under control of the control unit during pivoting of the arm from a rest position. After the arm having moved to a new rest position, the movement sensor initiates a new increase of the torque provided by the electrical motor by the control unit to the control value selected by the rider of the vehicle with the help of the engine control rotary switch.

If the gear change is controlled by a Bowden cable, the tension, which is established within the Bowden cable when a process of a changing of the gear is initiated, but is not jet accomplished, can be measured. If the measurement shows that the tension is high, a respective signal is output to the control unit, which in turn reduces the torque provided by the electric motor, as soon as the rider has reached a dead centre with the pedals.

The application also relates to a vehicle with a above-described control unit.

For shutting down the electric motor, the gear control unit may additionally comprise a coupling unit for coupling and decoupling the electric motor to and from the drive of the vehicle such that for shutting down the drive torque of the electric motor, the electric motor is decoupled from the drive and runs in idle mode, whereas, after having finished the changing of the gears, the coupling unit automatically couples the electric motor to the drive of the vehicle via a control unit.

The automatic shut down of the electric motor does not necessarily result in an automatic gear change when the torque provided by the rider falls below a threshold value. Rather, the gear change has to be initiated by the rider.

However, the gear units described below are designed such that the gear change is automatically initiated by the gear unit such that a manual shifter can be omitted. For this purpose, the gear unit comprises a threshold value transmitter, by which an upper threshold for the total torque may be set. The total torque consists of the torque of the drive provided by the rider and the torque provided by the electric motor. The total torque may be measured e.g. at the hub of a wheel of the vehicle. When the total torque reaches the upper threshold, an automatic shift down of the gears of the gear unit is provided, whereby the torque of the electric motor is reduced.

Further, an upper threshold for the torque at engaged gear may be set at the threshold torque transmitter, whereby an automatic shifting up of the gears of the gear unit is provided when the total torque reaches a lower threshold, whereby the torque of the electric motor is reduced during the time of the process of changing gears.

The threshold value transmitter being provided in the gear unit and being adjustable for the lower and upper threshold values of the total torque enables to initiate a gear change for shifting up or shifting down the gears, whereby, at the same time respectively during the gear change, the torque provided by the electric motor is shut down in both cases as it is done in the above-described manual mode.

A further possibility to automatically provide a gear change is to provide a tachometer at a bottom bracket axle, a tachometer at a drive shaft of the electric motor and a tachometer at a hub of a wheel. The control unit of the gear unit initiates an automatic shifting down or an automatic shifting up of the gears based on the relations of the measured rotational frequencies, concurrently reducing the torque provided by the electric motor during the gear change process.

For this purpose, different thresholds for the rotational frequency of the electric motor, of the hub of the wheel and of the bottom bracket axle are stored in the control unit such that a down shift of the gears is initiated when reaching the upper threshold values for the rotational frequency and a down shift of the gears is initiated when the rotational frequency values undergo lower threshold values.

This gear unit is preferably applied to bicycles but may also be applied to three wheelers and four wheelers, which are equipped with hand cranks.

A method for changing the gears of a vehicle that is driven by a rider, whereby the drive by the rider is supported by an electric motor, comprises the following method steps.

First, a drive mode is detected that a gear change is coming It is further determined that the torque provided by the rider is below a first threshold value. Thereupon, the torque provided by the electric motor is reduced. Then, a finish of the gear change is detected and an increase of the torque of the electric motor is applied.

This method for changing gears may be executed both with a manually initiated gear change as well as with an automatically initiated gear change such that the gears are not changed when being exposed to torque provided by the electric motor. Thus, the gears may be switched in a load-free mode and the risk of damaging the gears or further components of the power-train is reduced.

For determining the operational mode the total torque from the drive by a rider and a drive by an electric motor may be captured. For determining the operational mode before a gear change, solely the torque being provided by the rider may be taken into account. The determination and the evaluation of the operational mode may be done by the rider with manual actuation of a shifter to automatically reduce the torque of the electric motor at time.

An automatic gear change may be executed, if the total torque reaches an upper threshold value. When reaching the upper threshold value, a reduction of the torque provided by the electric motor may be executed for the time of the gear change and an automatic shifting up of the gears may be executed. An automatic up shifting of the gears is executed, if a lower threshold value for the total torque is reached with an engaged gear. Also concurrently, a reduction of the torque provided by the electric motor is applied to execute the gear change as load-freely as possible.

For reducing the torque provided by the electric motor, the gear unit interacts with the control unit and reduces the supply of current to the electric motor down to an idle voltage of the electric motor.

On the other hand, the gear unit may comprise a coupling unit and may decouple the electric motor from the drive of the vehicle for reducing the torque provided by the electric motor. However, the electric motor shall reduce its rotational frequency when being decoupled and should not produce torque at the output shaft. Rather, the rotational frequency of the electric motor is reduced until its idle rotational frequency.

Finally, it is possible to apply a method for changing gears in which an arm, which is biased elastically by a spring for moving a chain of the vehicle under a selected sprocket of a derailleur pivots around a pivot during gear change and a movement sensor of the gear device initiates a reduction of the torque of the electric motor when the arm pivots from a rest position.

When the arm of the derailleur reaching of an anew rest position, the electric motor may accelerate again.

In a method according to the current specification, it is provided a capturing of the position of a dead centre of a hand crank or a foot crank, the dead centre being specified by the torque provided by the rider being at a minimum and the reduction of the torque of the electric motor being initiated by the control unit for the time of the gear change.

According to a further method for changing gears, the rotational frequency of a hand crank axle or a foot crank axle, the rotational frequency of a shaft of the electric motor and the rotational frequency of a wheel of the vehicle are measured to determine the operational mode. A shifting up or shifting down of the gears of the gear unit with concurrent reduction of the torque of the electric motor for the time of the process of changing gears is initiated by the control unit based on the relations of the measured rotational frequencies. As the rotational frequency may reliably be measured with relatively simple and inexpensive sensors for rotational frequencies, it appears that this automatic method for changing gears has advantages.

The application also relates to a Bowden cable for actuation of gears of a vehicle, the Bowden cable comprises a measurement circuit for measuring a tension in the Bowden cable, whereby the measurement circuit for outputting a signal indicates a coming gear change if a change of the tension in the Bowden cable is measured.

In a further embodiment, the Bowden cable comprises an inner cable, two housings and a measurement circuit, whereby the inner cable runs through the housings and the measurement circuit, the measurement circuit is arranged between the two housings and comprises a pressure sensor which is to be compressed by the two housings.

The Bowden cable comprises an inner cable and a housing and a measurement circuit for measuring a movement of the inner cable, the measurement circuit outputs a signal for indicating a coming gear change if a movement of the inner cable is measured.

The Bowden cable comprises an optical sensor for determining a movement of the inner cable.

The invention will now be described with reference to the attached figures.
Figure 1 shows a schematic diagram of a vehicle with a manual shifter for changing gears and a control unit for controlling an electric motor according to a first embodiment;
Figure 2 shows a schematic diagram of a vehicle of figure 1 with a modified control unit;
Figure 3 shows a schematic diagram of a vehicle with an automatic gear unit according to a second embodiment of the application;
Figure 4 shows a schematic diagram of the vehicle with a modified automatic gear unit;
Figure 5 shows a schematic diagram of a bicycle with a derailleur and a manual gear unit according to a third embodiment of the application;
Figure 6 shows an embodiment of the primary drive of the vehicle.
Figure 7 shows an embodiment of a sensor for detecting a gear change.
Figure 8 shows a further embodiment of a sensor for detecting a gear change.
Figure 9 shows an embodiment for a connection between a shifter 12 and an arm 16 of a derailleur.
Figure 10 shows an embodiment of a sensor for use in the arrangement of Figure 9.
Figure 11 show a further embodiment for a sensor for detecting a gear change.

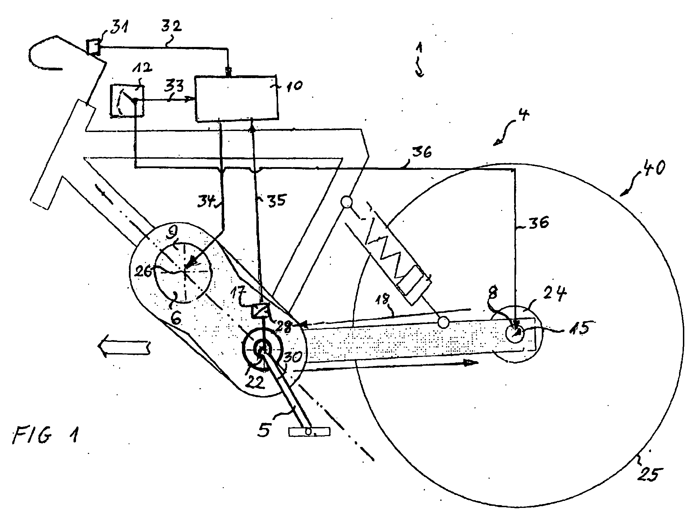

Figure 1 shows a schematic diagram of a vehicle 4 with gears in form of a gear hub 8 in a hub 24 of a wheel 25, a primary drive 5 for actuation by a rider, in this case with pedals for pedalling, and a drive 9 for actuation by an electric motor 6 that supports the drive of the vehicle 4 when a gear is engaged. The vehicle 4 further comprises an engine control rotary switch 31 and a control unit 10 that controls the power of the electric motor 6 via a signal cable 34. The engine control rotary switch 31 is to be manually actuated and is connected to the control unit 10 via a signal cable 32.

The total torque M_{G}, that drives the wheel 25, is equal to the sum of the torque M_{M} being provided by the rider with the help of the primary drive 5 and the torque M_{E} being provided by the electric motor 6.

However, if the rider is induced to change the gears of the gear hub 8 by the help of a shifter 12, the change of the position of the shifter 12 is broadcast via a Bowden cable 36 to the hub 24, and is also broadcast to the control unit 10 via a signal cable 33. A gear unit 1 is understood as the assembly of the shifter 12 as a gear control unit, the Bowden cable 35, the torque sensor 28 and the gear hub.

The vehicle 4 further comprises a torque determination device 17 in form of a torque sensor 28 at the bottom bracket axle 22.

As the gear change should take place in a load-free condition, the torque determination device 17 determines the point in time, at which the torque of the drive provided by rider falls below a first threshold value. The torque determination device 17 determines this event and broadcasts it via a signal cable 33 to the control unit 10, which in turn reduces the drive 9 provided by the electric motor 6 via the control cable 34, e.g. such that the electric motor 6 runs idle.

The torque provided by the rider is usually at a minimum when the cranks are in vertical positions. However, the torque is usually already small enough before reaching this position such that the gear may be changed earlier. This may happen when the position of the cranks is 1/10 (one tenth) of a full revolution before being in a vertical position.

As soon as the torque sensor 28 signals to the control unit 10 via the signal cable 35 that torque is provided by the rider again, the control unit 10 activates the drive 9 by the electric motor 6 via the control cable 34 to provide the power which is defined by the engine control rotary switch 31.

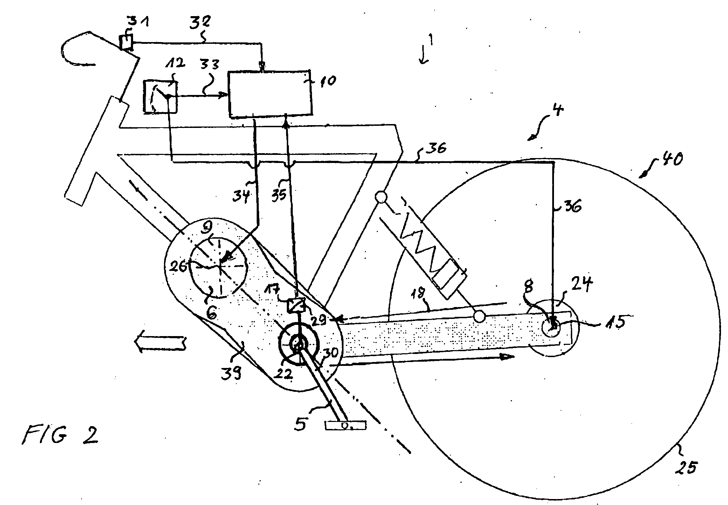

Figure 2 shows a schematic diagram of the vehicle according to figure 1 with a modified manual gear unit 1. Components with the same functions as in figure 1 will be referenced with the same reference numbers and will not be explained in the following figures again.

The modification of the manual gear unit 2 according to figure 1 is that instead of a torque sensor at the bottom bracket axle 22, a position sensor 29 for the position of the crank 30 is provided. It is known for crank drives provided by the rider that in a crank position, that is almost vertical, the torque provided by the rider is close to zero. Thus, a position sensor 29 for the position of the crank 30 may be used as torque determination device 17.

The position sensor 29 may be integrated with a tachometer of the vehicle 4. The tachometer for the rotational frequency may be mounted at the bottom bracket axle 22 and comprise teeth arranged in circumference direction. A hall sensor detects a change of the magnetic field when the bottom bracket axle 22 turns and the teeth pass the hall sensor. If the free space between some of the teeth is larger than between other teeth, the signal being captured by the hall sensor comprises further information about the position of the bottom bracket axle. Accordingly, the tachometer may also measure the positions of the cranks. Additionally to the position of the cranks, a condition may be checked, that the rider keeps the pedals in vertical position, and does not actuate the cranks. In this case, the gears may be changed without having a high load on the gears. With the help of the tachometer it may be detected that the rider does not pedal or pedals only very slowly.

Accordingly, the control unit 10 may take into account that the torque provided by the electric motor 6 is reduced after the shifter 12 having initiated a gear change and after receiving a signal including information about the position of the bottom bracket axle 22 via the signal cable 33 from the position sensor 29. Setting the current through the field windings of the electric motor 6 to zero causes the electric motor 6 of this embodiment to run in a free wheel condition. As an alternative or additionally, a mechanic freewheel may be provided at the drive shaft 26 of the electric motor 6 in a engine case 39, whereby the mechanical freewheel may be switched with the help of the control unit 10 via the control cable 34 to ensure a load-free gear change.

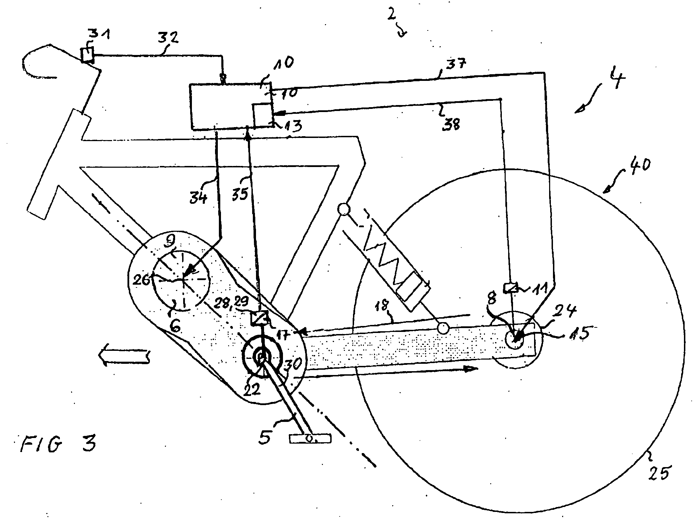

Figure 3 shows a schematic diagram of a vehicle according to figure 1 with an automatic gear unit 2 according to a second embodiment of the application. To enable an automatic gear change, the gear unit 2 in figure 3 comprises a torque sensor 11 in the hub 24 to capture the total torque that is applied to the wheel 25 and to feed the measurement value for the torque back to the threshold value transmitter 13 in the control unit 10.

An upper threshold value for the total torque that is measured by the torque sensor 11 at the hub 24 may be set in the threshold value transmitter 13. The control unit 10 automatically initiates shifting down the gears via the control cable 34, whereby the shutdown of the drive 9 is initiated based on signals provided to the control unit 10 via the control cable 35, the signals representing either the position of the crank 30 or the torque provided by the crank 30. The acceleration of the electric motor 6 may be executed either automatically after a predetermined switch time between 0.5 or 5 seconds, if evenly a position sensor is provided at the bottom bracket axle 22. If there is a torque sensor 28 for capturing the torque provided by the rider, a new increase of torque at the bottom bracket axle 22 may initiate the increase of the torque provided by the electric motor 6 under control of the control unit 10.

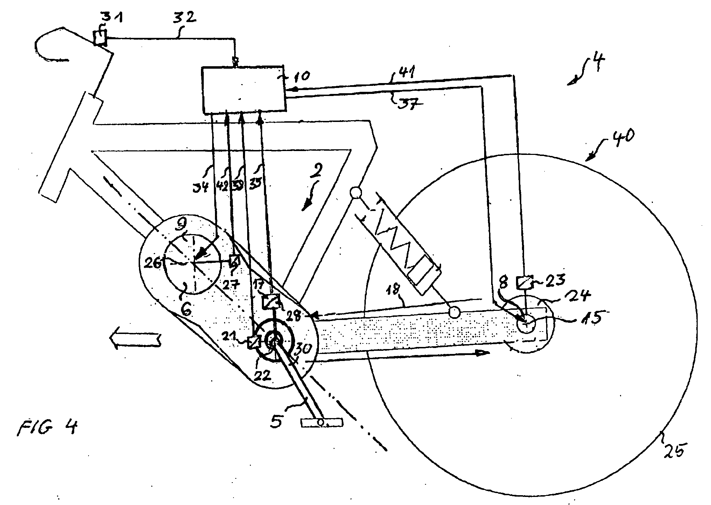

Figure 4 shows a schematic diagram of the vehicle 4 according to figure 1 with a modified automatic gear unit 2. With this modified automatic gear unit 2, the total torque is broadcast to the control unit 10 like in the embodiment of Figure 3. However, for the automatic shifting up and shifting down of the gears, the control unit 10 receives signals from sensor cables 38, 41 and 42. A tachometer 21 measures the rotational frequency of the crank 30 and transmits the measured frequency via the sensor cable 38 to the control unit 10. A tachometer 23 senses the rotational frequency of the wheel 25 and sends the measurement results via the sensor cable 41 to the control unit 10. The rotational frequency of the electric motor 6 is measured by the tachometer 27 that drives the signals transmitted via the sensor cable 42.

Based on the relations between these three rotational frequency values, the control unit 10 initiates automatic shifting up and shifting down of the gears such that a permissible rotational frequency for the electric motor is not exceeded and the rotational frequency of the crank 30 stays in a predetermined range defining the force provided by the rider. During the automatic gear switching, the control unit 10 reduces the torque of the electric motor 6 for the time of the gear change via the control cable 34.

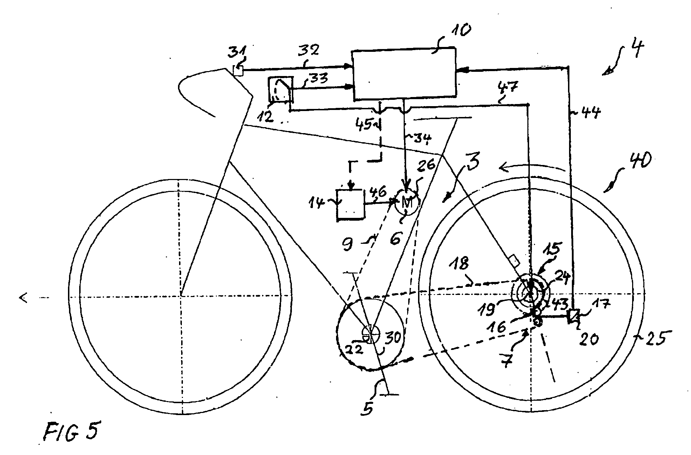

Figure 5 shows a schematic diagram of the vehicle 40 with a derailleur 7 and a manual gear unit 3 according to a third embodiment of the application. The shifter 12 is connected with the derailleur 7 at the back wheel 25 via a Bowden cable 47. The rider chooses a gear with the help of the shifter 12. The mechanic tension in the Bowden cable 47 changes with a position change of the shifter 12. The derailleur 7 comprises an arm 16 for balancing the length of the chain 18 during gear change. This arm 16 moves as soon as a gear change is executed und turns around a pivot 19. When finishing the gear change, the arm 16 takes a new rest position according to seize of the newly selected sprocket 43. A movement sensor 20 may transmit the start and the end of a gear change initiated by the shifter 12 to the control unit 10 via a signal line 44.

In an alternative embodiment, the coming gear change is detected by measuring a change of the tension in the Bowden cable 47. It is also detected that a gear change has finished with the help of the measured change of the tension in the Bowden cable 47.

Accordingly, a reduction or increase of the torque of the electric motor 6 may be controlled solely by a movement sensor 20 which interacts with the arm 16 via the control cable 34 by the control unit 10. Further, figure 5 shows a dotted line 45 from the control unit 10 to an optional coupling unit 14 with a mechanical coupling 46, with which the electric motor 6 may be decoupled and coupled from and to the drive of the vehicle after the gear change.

Common to the presented embodiments is that the gear unit has steps and that, accordingly, the gears are not continuously adjustable.

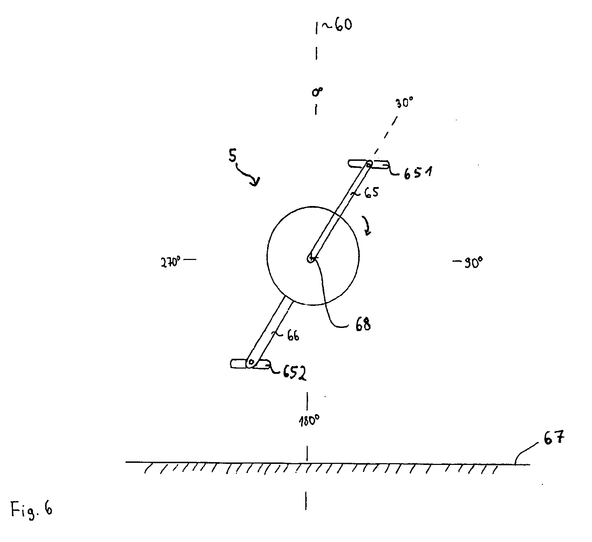

Figure 6 shows an embodiment of the primary drive 5 that is shown from the right side of the vehicle. The primary drive 5 comprises a right crank 65 and a left crank 66. Each of both cranks 65 and 65 is attached to a pedal 651 respectively to a pedal 652 for actuation by a rider. The position of the right crank 66 is marked in degree in relation to a vertical line 60. The vertical line 60 runs through the bottom bracket axle 68 and the geocentre.

If the right crank 65 shows upwards, the position is zero degree (0°). If the right crank 65 shows in forward direction perpendicular to the vertical line 60, the position is 90°. The position of the cranks in the figure is 30°. At 0° and 180° the torque provided by the rider is usually at a minimum, whereby it is usually at a maximum at 90° and 270°. Accordingly, the gear change is preferably executed in a range around 0° and in the range around 180°. If a position sensor is mounted in an exemplary embodiment such that one of the values of 340° and 160° is captured, a signal indicating one of these values initiates an reduction of the torque provided by the electric motor at a coming gear change. Then, the gear change is initiated.

In an embodiment, the detection of the position is supplemented by a tachometer. If the tachometer detects that the rotational frequency of the cranks 65 and 66 is zero or below a predetermined threshold, the rotational frequency of the electric motor is reduced and a gear change is initiated even if the position sensor shows a position different from the positions mentioned above. For this case, it is assumed that the rider does not pedal or that the rider moves the pedals only slowly. In this case the gear is changed independently of the position of the cranks, because the torque provided by the primary drive 5 is so small that the gears can be switched without risk of damage and with low noise.

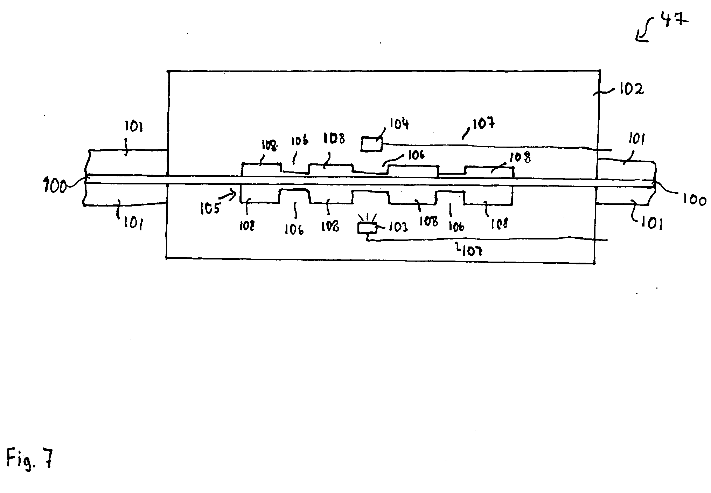

Figure 7 shows an embodiment of a sensor 120 for detecting a gear change. Figure 7 shows a Bowden cable 47 with an inner cable 100 and a housing 101 for the inner cable 100. The housing 101 is interrupted by a sleeve 102, a part of the inner cable 100 glides within the sleeve 102, the other parts of the inner cable 100 glide in the housing 101. The part of the inner cable 100 running within the sleeve 102 comprises an attachment 105 being fixed to the inner cable 100. The attachment 105 comprises dents 106, such that the diameter of the attachment changes several times in longitudinal direction. The parts of the attachment 105 between dents 106 are called elevations 108.

A light-beam sender 103 and a light-beam receiver 104 are provided in the sleeve 102, both being in fixed positions relatively to the sleeve 102. The light-beam sender 103 emits a light beam in the direction of the light-beam receiver 104. If there is a dent 106 between the light-beam sender 103 and the light-beam receiver 104, the light-beam receiver 104 receives the light beam, whereas the light-beam receiver 104 does not receive the light beam if there is an elevation 108 between the light-beam sender 103 and the light-beam receiver 104. The light-beam sender 103 and the light-beam receiver 104 are connected via signal cables 107 to a control unit not shown in this figure.

If the inner cable 100 moves within the housing 101 and the sleeve 102, a plurality of dents 106 and elevations 108 pass the light-beam receiver 104. The light beam receiver 104 receives a light beam each time a dent 106 passes the light beam receiver 104. The light beam receiver 104 outputs a signal to the control unit, the signal indicating if the light beam receiver 104 receives light or not. The control unit calculates from this signal how many dents 106 have passed the light beam receiver 104. The number of passing dents 104 gives an indication how far the inner cable has moved. Which gear is selected depends on movement of the inner cable 100 such that the control unit may calculate the position of the inner cable 100 and may calculate the respective selected gear from the position of the inner cable 100. The sensor 120 may be calibrated at the production of the vehicle and may be recalibrated during the lifetime of the vehicle.

In a further aspect of the current specification not shown here, the inner cable itself comprises dents and elevations such that the light beam is either received or not received depending on the position of the inner cable.

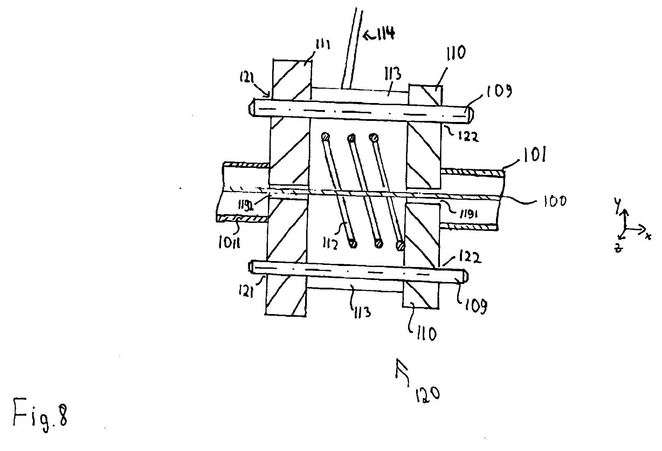

Figure 8 shows an embodiment of a sensor 120 for detecting a gear change. The sensor 120 comprises a first plate 110, two round guides 109, a second plate 111, a spring 112 and a pressure sensor 113. The first plate 110 and the second plate 111 are parallel to each other. The first and second plates 110 and 111 are formed as hollow cylinders, the openings including the middle axle of the cylinders are called ducts. The guides 109 extend perpendicular to the plates 110 and 111 and are fixed to the second plate 111 with press fits 121. The first plate 110 has openings holding the guides 109. There are sliding fits 122 between the first plate 110 and the guides 109 such that the first plate 110 may move in the direction to the second plate 111 and in the opposite direction away from the second plate 111.

The inner cable 100 runs parallel to the guides 109 from the right to the left through a first housing 101, a first duct 1191 of the first plate 110, a second duct 1192 of the second plate 111 and a second housing 1011.

The spring 112 is arranged between the first plate 110 and the second plate 111 such that the spring 112 is compressed when the first plate 110 moves towards the second plate 111. The spring 112 is decompressed when the first plate 110 moves away from to the second plate 111. Further, the pressure sensor 113 is provided between the first plate 110 and the second plate 111 for measuring the pressure between the first plate 110 and the second plate 111. The pressure sensor 113 transmits its measurement results to a control unit like the control unit 10 shown in Figure 5 via the signal cables 114. The pressure sensor 113 may comprise a piezoelectric sensor for measuring the pressure between the first plate 110 and the second plate 111.

In an alternative embodiment, a strain gauge is provided between the first plate 110 and the second plate 111. The stain gauge outputs a signal that depends on the de formation of the stain gauge and therefore on the distance between the first plate 110 and the second plate 111.

In further embodiments, the distance between the first plate 110 and the second plate 111 may be measured by capacitors or resistors that are arranged such that their values vary with the distance.

The second plate 111 is fixed to a frame of the vehicle. A tension in the inner cable 100 leads to tensions in the housings 101 and 1011 pressing the first plate 110 and the second plate 111 together. The spring 112 generates a force in the opposite direction pushing the first plate 110 in the away from the second plate 111 until the first plate 110 is in a rest position in which the forces are in equilibrium.

If the inner cable 100 is e.g. pulled due to a turn of the shifter, the friction between the inner cable 100 and the housings 101 and 1011 causes that the force between housings 101 and 1011 also increases. Accordingly, the first plate 110 moves towards the second plate 111, increasing the pressure in the pressure sensor 113. The change of the pressure is transmitted via the cables 114 to the control unit which determines from a measured change of the pressure that there is a coming gear change.

The sensor 120 may be positioned between the shifter and the gears e.g. close to the bottom bracket of a vehicle.

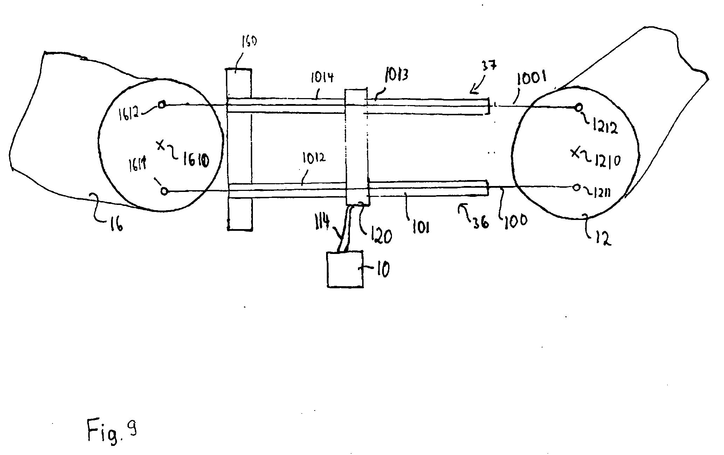

Figure 9 shows an alternative embodiment for the connection between a shifter 12 and an arm 16 of a derailleur. The shifter 12 turns around a pivot 1210 and the arm 16 around a pivot 1611. Two Bowden cables 36 and 37 are provided between the shifter 12 and the arm 16. The first Bowden cable 36 comprises an inner cable 100, a first housing 101 and a second housing 1012, the second Bowden cable 37 comprises an inner cable 1001, a third housing 1013 and a fourth housing 1014. A first end of the inner cable 100 is attached to a fasting point 1211 of the shifter 12 and a first end the inner cable 1001 is attached to a fastening point 1212 of the shifter 12, the pivot 1210 is on a line connecting the points 1211 and 1212. A second end of the inner cable 100 is attached to a fasting point 1611 of the arm 16 and a second end the inner cable 1001 is attached to a fastening point 1612 of the arm 16, the pivot 1610 is on a line connecting the points 1611 and 1612.

If the shifter 12 is actuated by a rider, the shifter 12 turns around the pivot 12. If e.g. the shifter 12 turns right, the inner cable 1001 is pulled in the right direction and the inner cable 100 is pulled to the left direction. Thus, the arm 16 also turns right.

A sensor 120 is provided between the housings 1011 and 101 and between the housings 1013 and 1014. The sensor 120 is connected to the control unit 10 via the cables 114 and measures movements of the inner cables 100 and 1001. The measurement results are transmitted to a control unit 10 which determines from the measurement results if a gear change is initiated.

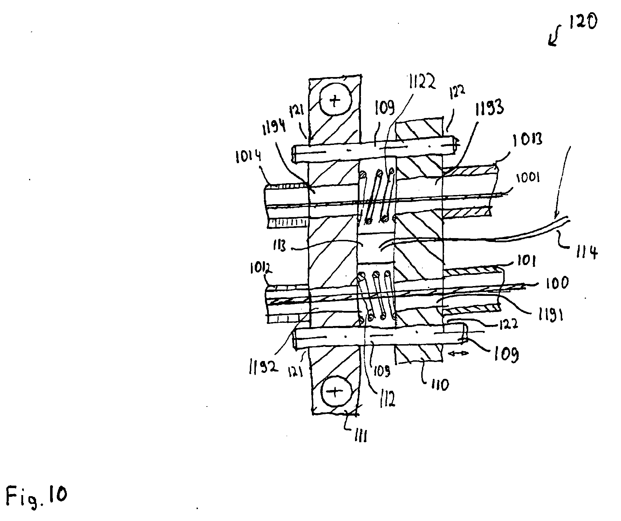

Figure 10 shows an embodiment of a sensor 120 for use in the arrangement of Figure 9. The sensor 120 comprises a first plate 110, two round guides 109, a second plate 111, two springs 112 and 1122 and a pressure sensor 113. The first plate 110 and the second plate 111 are arranged parallel to each other. The guides 109 are perpendicular to the plates 110 and 111 and are fixed to the second plate 111 with press fits 121. The first plate 110 has openings holding the guides 109. There are sliding fits 122 between the first plate 110 and the guides 109 such that the first plate 110 may move towards the second plate 111 and away from the second plate 112.

The inner cable 100 runs from the right to the left through a first housing 101, through a first duct 1191 in the first plate 110, through a second duct 1192 in the second plate 111 and through a second housing 1011. The inner cable 1001 runs from the right to the left through a third housing 1013, a third duct 1193 in the first plate 110, a fourth duct 1194 of the second plate 110 and a fourth housing 1014.

The two springs 112 and 1122 are arranged between the first plate 110 and the second plate 111 such that the springs 112 and 1122 are compressed or stressed during movements of the first plate 110. Further, the pressure sensor 113 is provided between the first plate 110 and the second plate 111 for measuring the pressure between the first plate 110 and the second plate 111. The pressure sensor 113 transmits the measurement results to a control unit.

The pressure sensor 113 may comprise a piezoelectric sensor or a stain gauge. If the shifter 12 is turned, the inner cables 100 and 1001 are moved. This leads, due to the fractions between the inner cables 100 and the housings 101, 1012 and the fractions between the inner cable 1011 and the housings 1013 and 1014, to a change of the force provided by the housings 101, 1012, 1013 and 1014 on the first plate 110 and the second plate 111. This change of force leads to a movement of the first plate 110 relative to the second plate 111, changing the pressure in the pressure sensor 113.

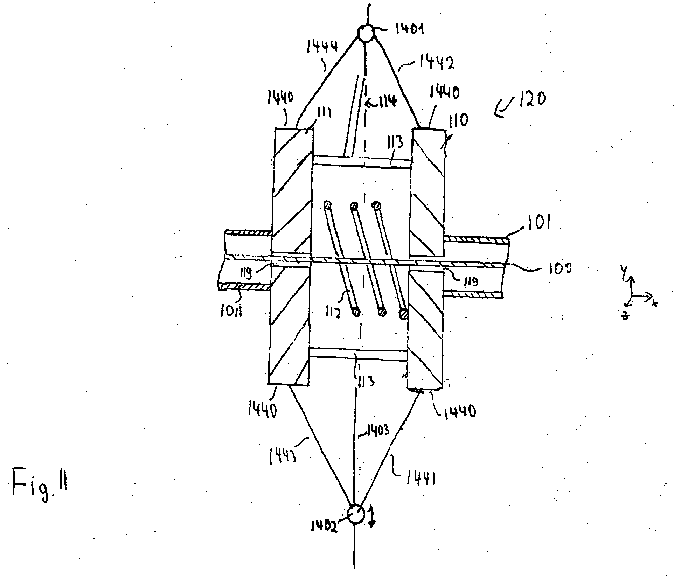

Figure 11 show a further embodiment for a sensor 120 similar to the sensor 120 of Figure 8. In comparison to the sensor of Figure 8, the sensor 120 does not comprise the glides 109 of Figure 8, but comprises two rings 1401 and 1402 gliding on a rail 1403. The rail 1403 has an extension perpendicular to the inner cable 100 between the first plate 110 and the second plate 111 such that the rings 1401 and 1402 may glide up and down perpendicular to the inner cable 100, whereby the rings are at opposite sides of the sensor 120. The rail 1403 is fixed to the frame of the vehicle.

A first arm 1411 connects the first plate 110 at a point of the lateral area 1440 of the first plate 110 with the ring 1402. A second arm 1412 connects the first plate 110 at a point of its lateral area 1440 with the ring 1401. A third arm 1413 connects the second plate 111 at a point of its lateral area 1440 with the ring 1402. A fourth arm 1414 connects the second plate 111 at a point of its lateral area 1440 with the ring 1401.

If the first and second plates 110 and 111 move relatively to each other, the rings 1401 and 1402 glide up and down the rail 1403 ensuring that the first plate 110 and second plate 111 move only in the direction parallel to the inner cable 100. The other components of the sensor 120 are the same as those of the sensors 120 of Figure 8.

### List of reference numbers

1 gear unit
2 gear unit
3 gear unit
4 vehicle
5 drive by a rider
6 electric motor
7 derailleur gear
8 gear hub
9 drive provided by the electric motor
10 control unit
11 drive torque sensor in a wheel hub
12 shifter
13 threshold value transmitter
14 coupling unit
15 gear
16 arm
17 torque determination device
18 chain
19 pivot
20 movement sensor
21 tachometer
22 bottom bracket axle
23 tachometer
24 hub
25 bicycle wheel
26 drive shaft of the electric motor
27 tachometer
28 torque sensor at the bottom bracket
29 position sensor for the position of the crank
30 crank
31 engine control rotary switch
32 signal cable
33 signal cable
34 signal cable
35 cable
36 Bowden cable
37 Bowden cable
38 sensor control cable
39 engine case
40 bicycle
41 sensor control cable
42 sensor control cable
43 sprocket
44 single line
45 dotted line
46 mechanical coupling
47 Bowden cable
60 vertical line
65 crank
66 crank
100 inner cable
101 housing
102 sleeve
103 light beam sender
104 light beam receiver
105 attachment
106 dent
107 signal cables
108 elevation
109 guide
110 first plate
111 second plate
112 spring
113 pressure sensor
114 signal cable
119 duct
120 sensor
121 press fit
122 slide fit
651 pedal
652 pedal
1001 inner cable
1012, 1013, 1014 housing
1210, 1610 pivot
1211, 1212, 1611, 1612 point
1122 spring
1192, 1193, 1194 duct

## Claims

1. Control unit (10) for a vehicle (4), the vehicle (4) comprising:
- at least one primary drive (5) for actuation by a rider;
- a power-train for driving a wheel (25) of the vehicle (4), whereby the powertrain comprises a gear unit (3) with a gear control for changing the gear ratios of the gear unit (3), the gear unit (3) comprising gears and a gear control unit, whereby the gear control unit comprises a shifter (12), with which a change of gear ratio of the gear unit (3) is manually selectable;
- an electric motor (6) for supporting the primary drive by providing torque;
- whereby the control unit (10) is constructed for controlling the torque provided by the electric motor (6) and for reducing the torque provided by the electric motor (6) during a change of the gear ratio, when a torque being provided by the primary drive is below a first threshold value,
wherein the control unit (10) comprises a Bowden cable (47) for actuating the gears, the Bowden cable (47) having an inner cable (100) and a housing (101) and a measurement circuit for measuring a movement of the inner cable (100), the measurement circuit being provided for outputting a signal for indicating a coming gear change if a movement of the inner cable (100) is measured, an optical sensor for determining a movement of the inner cable (100), the optical sensor comprising
- a sleeve (102) that interrupts the housing (101), such that a part of the inner cable runs (100) within the sleeve (102), the part of the inner cable (100) that runs within the sleeve (102) comprising an attachment (105) that is fixed to the inner cable (100),
- a light beam sender (103) and a light beam receiver (104) that are provided in the sleeve (102), both being in fixed positions relative to the sleeve (102), the attachment (105) comprising dents (106) and elevations (108), which are provided between the dents (106), such that a diameter of the attachment (105) changes several times in a longitudinal direction of the attachment (105), wherein the light beam receiver (104) receives light from the light beam sender (103) if there is a dent (106) between the light beam sender (103) and the light beam receiver (104), and wherein the light beam receiver (104) does not receive light from the light beam sender (103) if there is an elevation (108) between the light beam sender (103) and the light beam receiver (104).

2. Control unit (10) according to claim 1, whereby the gear unit (3) comprises a torque determination device (17) for measuring the torque provided by the primary drive (5), whereby the control unit (10) is constructed to receive a measurement value for the measured torque.

3. Control unit (10) according to one of the claims 1 and 2, whereby the vehicle (4) comprises at least one foot or hand crank (30) and the control unit (10) is constructed for receiving a measurement value for the position of foot or hand crank (30) and for receiving a measurement value for the rotational frequency of the foot or hand crank (30).

4. Assembly of a control unit (10) according to claim 1, comprising a Bowden cable (47) for actuating the gears and a measurement circuit for measuring a tension in the Bowden cable (47) and for outputting a signal for indicating a coming gear change if a change of the tension in the Bowden cable (47) is measured.

5. Assembly according to claim 4, whereby the Bowden cable (47) comprises an inner cable (100), two housings (1013, 1014) and a measurement circuit, whereby the inner cable (100) runs through the housings (1013, 1014) and the measurement circuit, the measurement circuit being arranged between the two housings (1013, 1014) and comprising a pressure sensor (113) to be compressed by the two housings (1013, 1014).

6. Assembly according to one of the claims 4 to 5, whereby the torque determination device (17) comprises a torque sensor (28) mounted on a bottom bracket axle (22) of the vehicle (4).

7. Assembly according to one of the claims 4 to 5, whereby the torque determination device (17) comprises a position sensor for determining the position of a foot or hand crank (30).

8. Assembly according to one of the claims 4 to 7, whereby the torque determination device (17) comprises a torque sensor provided in the hub (24) of the wheel (25), the torque sensor determining the total torque in the hub (24).

9. Assembly according to one of the claims 4 to 8, whereby the gear control unit comprises a threshold value transmitter (13), with which an upper threshold for the total torque can be set, and whereby, with the total torque reaching the upper threshold, an automatic shifting down of the gears is initiated, thereby the gear control unit reducing the torque of the electric motor (6).

10. Assembly according to one of the claims 4 to 9, whereby the gear control unit comprises a threshold determination transmitter with which a lower threshold for the total torque is settable, and whereby the total torque falling below a lower threshold causes an automatic switching up the gears, thereby the control unit reducing the torque of the electric motor (6).

11. Assembly according to one of the claims 4 to 10, whereby the gear unit (3) comprises a coupling unit (14) for coupling and decoupling the electric motor (6) to respectively from the drive of the vehicle (4) and for reducing the torque provided by the electric motor (6) at gear changes by decoupling the electric motor (6) from the drive.

12. Assembly according to one of the claim 4 to 11, whereby the gear control unit comprises a tachometer (21) on an axle of a hand crank or foot crank (30), a tachometer (27) for a shaft of the electric motor (6) and a tachometer (23) on a hub (24) of a wheel (25), whereby the gear control unit initiates an automatic up shifting or down shifting of the gears with concurrent reduction of the torque provided by the electric motor (6) during the gear change based on the relations of the measured rotational frequency.

13. Bicycle (4) with control unit (10) according to one of the claims 1 to 3 or an assembly according to of the claims 4 to 12.

## Patentansprüche

1. Steuereinheit (10) für ein Fahrzeug (4), wobei das Fahrzeug (4) aufweist:
- zumindest einen Primärantrieb (5) zur Betätigung durch einen Fahrer;
- einen Antriebsstrang zum Antreiben eines Rades (25) des Fahrzeugs (4), wobei der Antriebsstrang eine Getriebeeinheit (3) mit einer Getriebesteuerung zum Verändern der Übersetzungsverhältnisse der Getriebeeinheit (3) aufweist, wobei die Getriebeeinheit (3) Gänge und eine Getriebesteuerungseinheit aufweist, wobei die Getriebesteuerungseinheit einen Umschalter (12) aufweist, mit dem eine Änderung des Übersetzungsverhältnisses der Getriebeeinheit (3) manuell auswählbar ist;
- einen elektrischen Motor (6) zur Unterstützung des Primärantriebs durch Bereitstellen eines Drehmoments;
wobei die Steuerungseinheit (10) aufgebaut ist, um das Drehmoment, das durch den elektrischen Motor (6) bereitgestellt wird, zu regeln und um das durch den elektrischen Motor (6) bereitgestellte Drehmoment während eines Wechsels des Übersetzungsverhältnisses zu reduzieren, wenn ein Drehmoment, das durch den Primärantrieb bereitgestellt wird, unter einem ersten Schwellwert liegt, wobei die Steuerungseinheit (10) ein Bowdenkabel (47) zur Betätigung der Gänge aufweist, wobei das Bowdenkabel (47) ein inneres Kabel (100) und ein Gehäuse (101) aufweist und einen Mess-Schaltkreis zum Messen einer Bewegung des inneren Kabels (100), wobei der Mess-Schaltkreis zum Ausgeben eines Signals zur Anzeige eines bevorstehenden Gangwechsels bereitgestellt ist, wenn eine Bewegung des inneren Kabels (100) gemessen wird, sowie einen optischen Sensor zur Bestimmung einer Bewegung des inneren Kabels (100), wobei der optische Sensor aufweist:
- eine Hülse (102) die das Gehäuse (101) unterbricht, so dass ein Teil des inneren Kabels (100) innerhalb der Hülse (102) verläuft, wobei der Teil des inneren Kabels (100) der innerhalb der Hülse (102) verläuft, eine Halterung (105) aufweist, die an dem inneren Kabel (100) befestigt ist,
- einen Lichtstrahlsender (103) und einen Lichtstrahlempfänger (104), die in der Hülse (102) bereitgestellt sind, wobei sich beide in festen Positionen relativ zu der Hülse (102) befinden, wobei die Halterung (105) Vertiefungen (106) und Erhebungen (108) aufweist, die zwischen den Vertiefungen (106) angeordnet sind, so dass sich ein Durchmesser der Halterung (105) mehrere Male in Längsrichtung der Halterung (105) verändert, wobei der Lichtstrahlempfänger (104) Licht von dem Lichtstrahlsender (103) empfängt, wenn eine Vertiefung (106) zwischen dem Lichtstrahlsender (103) und dem Lichtstrahlempfänger (104) liegt, und wobei der Lichtstrahlempfänger (104) kein Licht von dem Lichtstrahlsender (103) empfängt, wenn eine Erhöhung (108) zwischen dem Lichtstrahlsender (103) und dem Lichtstrahlempfänger (104) liegt.

2. Steuerungseinheit (10) gemäß Anspruch 1, wobei die Getriebeeinheit (3) ein Drehmomentbestimmungsgerät (17) zum Messen des durch den Primärantrieb (5) bereitgestellten Drehmoments aufweist, wobei die Steuerungseinheit (10) dazu aufgebaut ist, einen Messwert für das gemessene Drehmoment zu empfangen.

3. Steuerungseinheit (10) gemäß einem der Ansprüche 1 und 2, wobei das Fahrzeug (4) zumindest eine Fuß- oder Handkurbel (30) aufweist, und wobei die Steuerungseinheit (10) zum Empfangen eines Messwertes für die Position der Fuß- oder Handkurbel (30) und zum Empfangen eines Messwertes für die Rotationsfrequenz der Fuß- oder Handkurbel (30) aufgebaut ist.

4. Anordnung einer Steuerungseinheit (10) gemäß Anspruch 1, die ein Bowdenkabel (47) zum Betätigen der Gänge und einen Mess-Schaltkreis zum Messen eines Zugs in dem Bowdenkabel (47) und zum Ausgeben eines Signals zur Anzeige eines bevorstehenden Gangwechsels, wenn eine Änderung des Zugs in dem Bowdenkabel (47) gemessen wird, aufweist.

5. Anordnung gemäß Anspruch 4, wobei das Bowdenkabel (47) ein inneres Kabel (100), zwei Gehäuse (1013, 1014) und einen Mess-Schaltkreis aufweist, wobei das innere Kabel (100) durch die Gehäuse (1013, 1014) und den Mess-Schaltkreis hindurch verläuft, wobei der Mess-Schaltkreis zwischen den beiden Gehäusen (1013, 1014) angeordnet ist und einen Drucksensor (113) zum Zusammendrücken durch die beiden Gehäuse (1013, 1014) aufweist.

6. Anordnung gemäß einem der Ansprüche 4 bis 5, wobei das Drehmomentbestimmungsgerät (17) einen Drehmomentsensor (28) aufweist, der auf einer Tretlagerachse (22) des Fahrzeugs (4) befestigt ist.

7. Anordnung gemäß einem der Ansprüche 4 bis 5, wobei das Drehmomentbestimmungsgerät (17) einen Positionssensor zur Bestimmung der Position einer Fuß- oder Handkurbel (30) aufweist.

8. Anordnung gemäß einem der Ansprüche 4 bis 7, wobei das Drehmomentbestimmungsgerät (17) einen Drehmomentsensor aufweist, der in der Nabe (24) des Rades (25) angeordnet ist, wobei der Drehmomentsensor das Gesamtdrehmoment in der Nabe (24) bestimmt.

9. Anordnung gemäß einem der Ansprüche 4 bis 8, wobei die Getriebesteuerungseinheit einen Grenzwertübermittler (13) aufweist, mit dem ein oberer Grenzwert für das Gesamtdrehmoment festgesetzt werden kann, und wobei, mit Erreichen des oberen Grenzwertes durch das Gesamtdrehmoment, ein automatisches Herunterschalten der Gänge ausgelöst wird, wodurch die Getriebesteuerungseinheit das Drehmoment des elektrischen Motors (6) reduziert.

10. Anordnung gemäß einem der Ansprüche 4 bis 9, wobei die Getriebesteuerungseinheit einen Grenzwertbestimmungsübermittler aufweist, mit dem ein unterer Grenzwert für das Gesamtdrehmoment festgesetzt werden kann, und wobei ein Fallen des Gesamtdrehmoments unter den unteren Grenzwert ein automatisches Heraufschalten der Gänge auslöst, wodurch die Getriebesteuerungseinheit das Drehmoment des elektrischen Motors (6) reduziert.

11. Anordnung gemäß einem der Ansprüche 4 bis 10, wobei die Getriebeeinheit (3) eine Kupplungseinheit (14) zum Ankuppeln und Abkuppeln des elektrischen Motors (6) an bzw. von dem Antrieb des Fahrzeugs (4) aufweist, und zum Reduzieren des durch den elektrischen Motor (6) bereitgestellten Drehmoments bei Gangwechseln durch Abkuppeln des elektrischen Motors (6) von dem Antrieb.

12. Anordnung gemäß einem der Ansprüche 4 bis 11, wobei die Getriebesteuerungseinheit ein Tachometer (21) auf einer Achse einer Fuß- oder Handkurbel (30) aufweist, einen Tachometer (27) für eine Welle des elektrischen Motors (6), und einen Tachometer (23) auf einer Nabe (24) eines Rads (25), wobei die Getriebesteuerungseinheit ein automatisches Heraufschalten oder Herabschalten der Gänge unter gleichzeitiger Reduzierung des durch den elektrischen Motor (6) bereitgestellten Drehmoments während des Gangwechsels auslöst, auf Grundlage der Verhältnisse der gemessenen Rotationsfrequenz.

13. Zweirad (4) mit einer Steuerungseinheit (10) gemäß einem der Ansprüche 1 bis 3 oder mit einer Anordnung gemäß einem der Ansprüche 4 bis 12.

## Revendications

1. Unité de contrôle (10) pour un véhicule (4), le véhicule comprenant:
- au moins un entraînement primaire (5) pour l'actionnement par un cycliste;
- une chaîne cinématique pour entraîner une roue (25) du véhicule (4), dans laquelle la chaîne cinématique comprend une unité d'engrenage (3) avec un contrôle d'engrenage pour changer les rapports de transmission de l'unité d'engrenage (3), l'unité d'engrenage (3) comprenant des roues dentées et une unité de contrôle d'engrenage, dans laquelle l'unité de contrôle de vitesse comprend une manette (12) avec laquelle un change de rapport de transmission de l'unité d'engrenage (3) est sélectionnable manuellement;
- un moteur électrique (6) pour supporter l'entraînement primaire en fournissant du couple;
- dans laquelle l'unité de contrôle (10) est construite pour contrôler le couple fourni par le moteur électrique (6) et pour réduire le couple fourni par le moteur électrique (6) pendant un changement de vitesse, quand un couple fourni par l'entraînement primaire est dessous d'une primaire valeur limite,
dans laquelle l'unité de contrôle (10) comprend un câble Bowden (47) pour actionner des vitesses, le câble Bowden (47) comprenant un câble intérieure (100) et une boîte (101), et un circuit de mesure pour mesurer un mouvement du câble intérieur (100), le circuit de mesure étant pourvu pour émettre un signal de changement de vitesse imminent quand un mouvement du câble intérieur (100) est mesuré,
un capteur optique pour détecter un mouvement du câble intérieur (100), le capteur optique comprenant
- un manche (102) qu'interrompe la boîte (101) de manière qu'une portion du câble intérieur (100) passe par l'intérieur du manche (102), la portion du câble intérieur (100) qui passe par l'intérieur du manche (102) comprenant un dispositif de fixation (105) qui est attaché au câble intérieur (100),
- un émetteur de rayons lumineux (103) et un récepteur de rayons lumineux (104) qui sont pourvus dans le manche (102), tous les deux étant situés dans des positions fixes par rapport au manche (102), le dispositif de fixation (105) comprenant des encoches (106) et des élévations (108) qui sont pourvues entre les encoches (106), ainsi qu'un diamètre du dispositif de fixation (105) change plusieurs fois dans une direction longitudinale du dispositif de fixation (105), dans lequel le récepteur de rayons lumineux (104) reçoit de la lumière de l'émetteur de rayons lumineux (103) s'il y a une encoche (106) entre l'émetteur de rayons lumineux (103) et le récepteur de rayons lumineux (104), et dans lequel le récepteur de rayons lumineux (104) ne reçoit pas de lumière de l'émetteur de rayons lumineux (103) s'il y a une élévation (108) entre l'émetteur de rayons lumineux (103) et le récepteur de rayons lumineux (104).

2. Unité de contrôle (10) selon revendication 1, dans laquelle l'unité d'engrenage (3) comprend un dispositif de détermination de couple (17) pour mesurer le couple fourni par l'entrainement primaire (5), dans laquelle l'unité de contrôle (10) est construite pour recevoir une valeur mesurée pour le couple mesuré.

3. Unité de contrôle (10) selon une des revendications 1 à 2, dans laquelle le véhicule (4) comprend au moins une manivelle à pied ou à main (30) et dans laquelle l'unité de contrôle (10) est construite pour recevoir une valeur mesurée pour la position de la manivelle à pied ou à main (30) et pour recevoir une valeur mesurée pour la fréquence de rotation de la manivelle à pied ou à main (30).

4. Agencement d'une unité de contrôle (10) selon revendication 1, comprenant un câble Bowden (47) pour actionner les vitesses et un circuit de mesure pour mesurer une tension dans le câble Bowden (47) et pour émettre un signal pour indiquer un changement de vitesse imminent quand un changement de la tension dans le câble Bowden (47) est mesuré.

5. Agencement selon revendication 4, dans lequel le câble Bowden (47) comprend un câble intérieur (100), deux boîtes (1013, 1014) et un circuit de mesure, dans lequel le câble intérieur (100) traverse les deux boîtes (1013, 1014) et le circuit de mesure étant arrangé entre les deux boîtes (1013, 1014) et comprenant un capteur de pression (113) à être comprimé par les deux boîtes (1013, 1014).

6. Agencement selon une des revendications 4 à 5, dans lequel le dispositif de mesure de couple (17) comprend un capteur de couple (28) installé sur un axe de pédalier (22) du véhicule (4).

7. Agencement selon une des revendications 4 à 5, dans lequel le dispositif de détermination de couple (17) comprend un capteur de position pour déterminer la position de la manivelle à pied ou à main (30).

8. Agencement selon une des revendications 4 à 7, dans lequel le dispositif de détermination de couple (17) comprend un capteur de couple qui est pourvu dans le moyeu (24) de la roue (25), le capteur de couple déterminant le couple total dans le moyeu (24).

9. Agencement selon une des revendications 4 à 8, dans lequel l'unité de contrôle de vitesses comprend un transmetteur de valeur limite (13) avec lequel une limite supérieure pour le couple totale peut être réglée, et selon lequel, quand le couple total atteint la limite supérieure, une descente automatique des rapports est initiée, l'unité de contrôle de vitesses réduisant ainsi le couple du moteur électrique (6).

10. Agencement selon une des revendications 4 à 9, dans lequel l'unité de contrôle de vitesses comprend un transmetteur de détermination de valeur limite avec lequel une valeur limite inférieure est réglable, le couple total descendant en dessous de la valeur limite inférieure cause une montée automatique des rapports, l'unité de contrôle ainsi réduisant le couple du moteur électrique (6).

11. Agencement selon une des revendications 4 à 10, dans lequel l'unité d'agencement (3) comprend une unité de couplage (14) pour accoupler et découpler le moteur électrique (6) à ou de l'entraînement du véhicule (4) et pour réduire le couple fourni par le moteur électrique (6) pendant des changements de vitesse par le découplage du moteur électrique (6) de l'entraînement.

12. Agencement selon une des revendications 4 à 11, dans lequel l'unité de contrôle de vitesses comprend un tachymètre (21) sur un axe d'une manivelle à pied ou à main (30), un tachymètre (27) pour un arbre du moteur électrique (6) et un tachymètre (23) sur un moyeu (24) d'une roue (25), dans lequel l'unité de contrôle de vitesses entame une montée ou descente automatique des vitesses avec un réduction concurrente du couple fourni par le moteur électrique (6) pendant le changement de vitesses à base des relations du fréquence de rotation mesurée.

13. Bicyclette (4) avec une unité de contrôle (10) selon une des revendications 1 à 3 ou avec un agencement selon une des revendications 4 à 12.
